**Europäisches Patentamt**

**European Patent Office**

**Office européen des brevets**

(19)

(11) Numéro de publication: **0 209 406 B1**

(12) **FASCICULE DE BREVET EUROPEEN**

(45) Date de publication du fascicule du brevet:
04.04.90

(51) Int. Cl.⁴: **H04N 9/67**

(21) Numéro de dépôt: **86401168.9**

(22) Date de dépôt: **02.06.86**

(54) **Circuit d'élaboration des signaux analogiques de couleurs primaires d'un signal de télévision à partir de ses composantes numériques de luminance et chrominance.**

(30) Priorité: **04.06.85 FR 8508406**

(43) Date de publication de la demande:
**21.01.87 Bulletin 87/4**

(45) Mention de la délivrance du brevet:
**04.04.90 Bulletin 90/14**

(84) Etats contractants désignés:
**DE GB IT NL**

(56) Documents cités:
**EP-A- 0 098 888**
**EP-A- 0 100 678**
**EP-A- 0 100 967**

**S.M.P.T.E. JOURNAL,**
**vol. 90, no. 10, octobre 1981, pages 956-959, Scarsdale, New York, US; J.P. ROSSI: "A simple family of digital filters for a binary hierarchy"**

(73) Titulaire: **ETAT FRANCAIS représenté par le Ministre des PTT (Centre National d'Etudes des Télécommunications), 38-40 rue du Général Leclerc, F-92131 Issy-les-Moulineaux(FR)**
Titulaire: **Etablissement Public de Diffusion dit "Télédiffusion de France", 21-27 rue Barbès, F-92120 Montrouge(FR)**

(72) Inventeur: **Duvic, Gérard, Résidence Mercure 31, rue de Brest, F-35100 Rennes(FR)**
Inventeur: **Veillard, Michel, 11, Boulevard du Portugal, F-35100 Rennes(FR)**
Inventeur: **Paris, Laurent, 35, rue des Déportés du 11 NOVEMBRE 1943, F-38000 Grenoble(FR)**
Inventeur: **Senn, Patrice, 13, Grande Rue, F-38000 Grenoble(FR)**

(74) Mandataire: **Mongrédien, André et al, c/o BREVATOME 25, rue de Ponthieu, F-75008 Paris(FR)**

## Description

La présente invention concerne un circuit d'élaboration des signaux analogiques de couleurs primaires R, V, B (rouge, vert, bleu) d'un signal de télévision à partir de ses composantes numériques de luminance Y et de chrominance CR et CB.

L'invention s'applique notamment à la réception des signaux de télévision diffusés par satellite et la distribution sur réseau local d'images de télévision. Ces domaines demandent des moyens de filtrage flexibles des composantes reçues pour tenir compte des variations dans le temps et selon le lieu des conditions de réception, en particulier en diffusion par satellite, et des différents formats d'image possibles et donc des différentes fréquences d'échantillonnage possibles des composantes numériques.

Dans le domaine de la télévision en couleur, la saisie d'une scène est effectuée au moyen d'une caméra munie de trois tubes analyseurs qui correspondent chacun à l'une des trois couleurs primaires que sont le rouge, le vert et le bleu. De manière classique, les signaux électriques produits par ces tubes analyseurs sont combinés de manière à réduire la largeur de bande totale requise pour la diffusion de ce signal de télévision. A cet effet, un signal de luminance Y, proportionnel au signal de luminosité monochrome, et deux signaux de chrominance, par exemple R-Y et B-Y, sont produits à partir des signaux rouge (R), vert (V) et bleu (B).

Depuis quelques années, on assiste à une évolution dans le sens de la numérisation des composantes de luminance et de chrominance produites par la caméra, en vue d'une transmission numérique du signal de télévision vers le récepteur, et éventuellement d'un traitement numérique de ce signal dans le récepteur. Cette évolution est liée à l'apparition de circuits VLSI rapides qui permettent de remplacer, à moindre coût et à fiabilité accrue, une partie importante des fonctions analogiques traditionnelles par leur équivalent en numérique.

La transmission sous forme de composantes numériques du signal de télévision présente notamment l'avantage d'une amélioration de la qualité de réception liée à une meilleure immunité au bruit du signal transmis. Cette numérisation permet également une plus grande souplesse d'utilisation notamment pour la mémorisation sur bande de ces signaux dans les studios de radiodiffusion ou pour la manipulation de ces signaux (incrustations, effets spéciaux ou autres). Enfin, cette numérisation permet de coder une scène indépendamment du système standard de télévision utilisé, tel que les systèmes dénommés NTSC, PAL et SECAM.

On connaît un circuit d'élaboration des signaux primaires de couleur à partir des composantes numériques d'un signal de télévision. Ce circuit comprend un convertisseur numérique-analogique pour réaliser une conversion analogique des composantes numériques, un filtre passe-bas pour atténuer les duplications des spectres des composantes introduites par la numérisation de ces composantes, et un élément de dématriçage pour convertir les signaux analogiques de luminance et de chrominance en signaux primaires de couleurs.

Dans ce circuit, les composantes numériques sont d'abord converties en signaux analogiques puis sont combinées pour produire les signaux primaires de couleurs. Cette méthode n'est pas sans inconvénients. En effet, il est difficile d'obtenir simplement un filtre passe-bas analogique à phase linéaire, cette caractéristique étant pourtant essentielle en vidéo. Il est également impossible de modifier le gabarit d'un filtre analogique, ce qui limite sa flexibilité dans un environnement où les paramètres de codage (format d'image, fréquence d'échantillonnage) et les conditions de réception des signaux peuvent varier.

Au contraire, avec un filtre numérique, les gabarits de filtrage subissent une simple homothétie en fonction de la valeur de la fréquence d'échantillonnage. Ceci permet, en particulier, qu'un même circuit puisse traiter, sans aucune modification, des signaux de télévision présentés sous forme de composantes numériques quelles que soient les valeurs des fréquences d'échantillonnage des signaux de chrominance et de luminance pourvu que celles-ci restent dans le même rapport.

Par ailleurs, les coefficients de l'élément de dématriçage sont réalisés à l'aide de résistances. Le réglage de ces coefficients nécessite un tri soigné des résistances si l'on veut atteindre une bonne précision sur la valeur de ces coefficients.

Pour remédier à certains inconvénients de ce traitement analogique, il a déjà été proposé de réaliser une partie du traitement des signaux de chrominance sous forme numérique. La demande de brevet français FR-A 2 532 504 intitulée "Dispositif pour améliorer le rapport signal-bruit du canal de couleur dans un récepteur de télévision numérique" décrit un dispositif pour filtrer numériquement les deux signaux de chrominance au moyen d'un filtre adaptatif à réponse impulsionnelle finie dont la fréquence de coupure est fonction du spectre de fréquence instantané de chaque signal de chrominance.

Ce filtrage adaptatif est plus souple que le filtrage analogique dans lequel la fréquence de coupure est fixe. La détermination de la fréquence de coupure Fc est relativement simple puisqu'il s'agit d'augmenter la largeur du filtre si l'énergie du signal de chrominance reçu au-delà de la fréquence de coupure Fc courante dépasse un certain seuil. Cependant, ce critère de filtrage n'est pas tellement satisfaisant car il peut conduire, dans certains cas, à filtrer une partie utile du signal de chrominance.

Le filtrage numérique du signal de chrominance est également proposé dans la demande de brevet français FR-A 2 499 343 intitulée "Filtre numérique de chrominance pour un système de télévision à composantes numériques et procédé de filtrage utilisant ce filtre". Ce filtre numérique est conçu pour suréchantillonner le signal de chrominance de manière à obtenir un signal de chrominance ayant une fréquence d'échantillonnage identique à celle du signal de luminance. Ce filtre numérique est également conçu pour compenser les atténuations introduites par certains éléments du récepteur, tels que le convertisseur numérique-analogique, ou lors du codage numérique du signal de chrominance à l'émission.

La présente invention a pour but de simplifier la réalisation des fonctions de filtrage et de dématriçage, et d'introduire plus de flexibilité dans la fonction de filtrage. Ce but est atteint par l'utilisation d'une chaîne de traitement numérique composée d'un filtre numérique suivi d'un dématriceur numérique, ce dernier délivrant des signaux numériques de couleurs primaires. Ces signaux sont ensuite convertis en signaux analogiques pour attaquer le tube du récepteur de télévision.

Le filtre numérique utilisé est un filtre numérique interpolateur qui réalise un suréchantillonnage du signal de luminance Y dans un rapport 2 et qui suréchantillonne les signaux de chrominance pour les amener à une fréquence d'échantillonnage identique celle du signal de luminance.

Le filtre numérique interpolateur est conçu pour compenser l'atténuation en

$$\frac{\sin x}{x}$$

sur la composante de luminance produite par les convertisseurs numériques-analogiques et pour atténuer fortement le spectre dupliqué, dû la numérisation de chacune des composantes, autour de leurs fréquences d'échantillonnage. Cette compensation de l'atténuation en

$$\frac{\sin x}{x},$$

réalisée de manière numérique, peut être réutilisée quelle que soit la fréquence d'échantillonnage. En revanche, la réalisation en analogique de cette compensation ne permet pas cette flexibilité.

De manière précise, l'invention a pour objet un circuit d'élaboration des signaux primaires de couleurs d'un signal de télévision à partir de ses composantes numériques de luminance et de chrominance, ce circuit comprenant en cascade :
- un filtre numérique interpolateur recevant un signal numérique multiplexé desdites composantes dans lequel le signal de luminance est échantillonné à une fréquence $F_E$ quelconque et les signaux de chrominance à une fréquence $F'_E$, sous-multiple de $F_E$, ledit filtre délivrant un signal numérique de luminance et des signaux numériques de chrominance suréchantillonnés à la même fréquence $2.F_E$,
- un dématriceur numérique recevant les signaux numériques délivrés par le filtre et délivrant des signaux numériques primaires de couleur,
- un ensemble de trois convertisseurs numériques-analogiques recevant chacun un signal numérique primaire de couleur et produisant les signaux analogiques primaires de couleurs.

De manière préférée, la fréquence de coupure du filtre numérique interpolateur est fonction de l'énergie de bruit dans le signal multiplexé. De manière plus précise, il y a intérêt à appliquer ce principe pour les signaux de chrominance qui sont les signaux les plus exposés au bruit.

L'énergie de bruit peut être notamment déterminée par l'analyse des parties du signal vidéo ne contenant pas d'informations utiles de l'image, telles que la suppression trame, la suppression ligne ou des lignes bien spécifiques. Ceci permet de simplifier la réalisation du circuit d'analyse, par rapport au dispositif décrit dans la demande de brevet français FR-A 2 532 504 déjà citée, tout en améliorant la précision de l'estimation de l'énergie de bruit.

De manière avantageuse, le filtre numérique interpolateur comporte trois branches de traitement, la première branche comprenant un filtre interpolateur de luminance suivi d'un moyen de mise en forme, les deuxième et troisième branches de traitement comprenant chacune en cascade un premier filtre interpolateur de chrominance délivrant un signal de chrominance à la fréquence d'échantillonnage $F_E$, un second filtre interpolateur de chrominance délivrant un signal à la fréquence d'échantillonnage $2.F_E$ et un moyen de mise en forme.

De manière préférée, chaque branche de traitement comporte plusieurs filtres interpolateurs ayant chacun une fréquence de coupure fixe différente, et un moyen de commutation pour commuter sur chaque branche de traitement le filtre dont la fréquence de coupure $F_c$ est la plus proche de la fréquence de coupure idéale déterminée par l'énergie du bruit dans le signal multiplexé reçu.

De manière préférée, le second filtre interpolateur de chrominance des deuxième et troisième branches de traitement calcule une valeur intermédiaire entre deux valeurs échantillonnées successives des signaux de chrominance, cette valeur intermédiaire étant égale à la moyenne desdites valeurs échantillonnées.

Ceux-ci réalisent un filtrage en pente douce qui permet un meilleur rendu de l'image correspondant au signal de télévision reçu.

De manière préférée, notamment dans le cas où le circuit d'élaboration est réalisé sous forme d'un circuit intégré unique, le filtre numérique interpolateur peut comprendre un unique premier filtre interpolateur de chrominance traitant les deux signaux de chrominance, ceux-ci étant multiplexés dans le temps.

De même, dans le cas où le circuit d'élaboration est réalisé sous forme d'un circuit intégré unique, le dématriceur peut avantageusement comprendre des moyens pour diviser chaque opérande en plusieurs champs, des moyens pour effectuer la multiplication champ par champ, et des moyens pour additionner les résultats de ces multiplications partielles.

Une telle structure est plus intéressante qu'un multiplieur complet, qu'un réseau d'additionneurs ou qu'une table de multiplication, notamment parce qu'elle requiert moins d'éléments et occupe donc une surface moins importante sur un circuit intégré.

Les caractéristiques et avantages de l'invention ressortiront mieux de la description qui va suivre, donnée à titre illustratif mais non limitatif, en référence aux dessins annexés, sur lesquels :

- la figure 1 représente schématiquement la structure du circuit d'élaboration des signaux primaires de couleurs de l'invention,
- la figure 2A représente schématiquement le filtre numérique interpolateur du circuit de l'invention,
- la figure 2B représente la structure du signal multiplexé reçu par le circuit de l'invention,
- la figure 3 illustre un mode de réalisation du filtre interpolateur de luminance du filtre numérique interpolateur,
- la figure 4 est un diagramme représentant la fonction de transfert du filtre interpolateur de luminance de la figure 3,
- la figure 5 illustre un mode de réalisation du premier filtre interpolateur de chrominance du filtre numérique interpolateur,
- la figure 6 est un diagramme représentant le produit de la fonction de transfert du premier filtre interpolateur de chrominance par la fonction de transfert du second filtre interpolateur de chrominance,
- les figures 7A et 7B illustrent un mode de réalisation du second filtre interpolateur de chrominance pour chacun des deux signaux de chrominance,
- la figure 8 illustre un mode de réalisation du moyen de mise en forme de chaque branche de traitement du filtre numérique interpolateur, et
- la figure 9 illustre un mode de réalisation du dématriceur du circuit de l'invention.

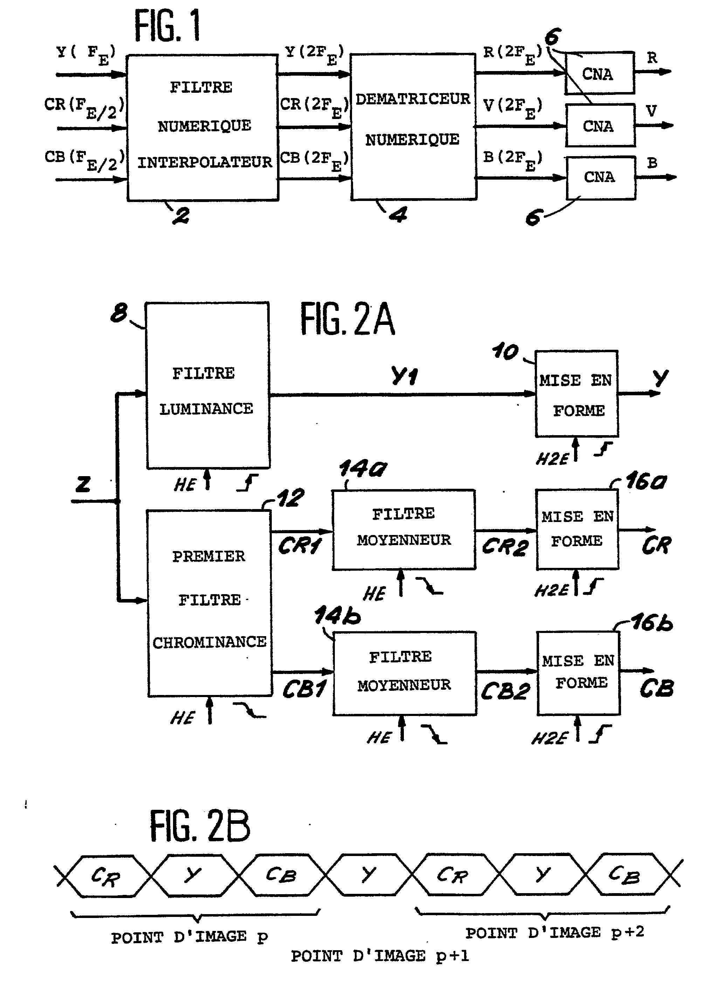

On a représenté schématiquement sur la figure 1 le circuit de l'invention. Ce circuit reçoit en entrée un signal numérique de luminance Y et deux signaux numériques de chrominance CR et CB, et délivre trois signaux analogiques de couleurs primaires R, V et B. Ce circuit comprend en cascade un filtre numérique interpolateur 2, un dématriceur numérique 4 et trois convertisseurs numériques-analogiques 6.

Le filtre numérique interpolateur 2 réalise un suréchantillonnage du signal de luminance Y dans un rapport 2. Il suréchantillonne également les signaux de chrominance CR et CB de manière à amener leur fréquence d'échantillonnage à la même fréquence que celle du signal de luminance suréchantillonné.

A titre d'exemple, dans le cas de la figure, les signaux de chrominance CR et CB reçus en entrée du filtre numérique interpolateur sont échantillonnés à une fréquence moitié de celle du signal de luminance. Dans ce cas, le filtre numérique interpolateur suréchantillonne ces signaux de chrominance dans un rapport quatre.

Le cas particulier où la fréquence d'échantillonnage des signaux de chrominance est égale à la moitié de celle du signal de luminance est important. Il est conforme notamment au codage MAC (Multiplexage Analogique par Composante) utilisé en diffusion par satellite et défini dans le document SPB284 de l'Union Européenne de Radiodiffusion (U.E.R). Ce codage est fondé sur une compression temporelle des signaux de luminance et de chrominance avec des taux de compression respectifs de 1,5 et de 3.

De manière générale, la fréquence d'échantillonnage des signaux de chrominance est un sous-multiple de la fréquence d'échantillonnage du signal de luminance. Cette largeur de bande réduite pour les signaux de chrominance est rendue possible par le fait que l'oeil possède une moins bonne sensibilité aux variations transitionnelles de couleurs par rapport aux variations de luminosité.

Outre le suréchantillonnage des signaux de luminance et de chrominance, le filtre numérique interpolateur 2 réalise, dans la bande passante, une compensation de l'atténuation en

$$\frac{\sin x}{x}, \quad (\text{où } x = \frac{\pi F}{2 F_E})$$

des convertisseurs numériques-analogiques, pour le signal de luminance. Il réalise de plus une atténuation des duplications de spectre introduites lors de la numérisation à l'émission des signaux de chrominance et de luminance.

Les signaux de luminance et de chrominance suréchantillonnés à une même fréquence d'échantillonnage sont reçus en entrée du dématriceur numérique 4. Celui-ci produit les signaux de couleurs primaires, sous forme numérique, par combinaison linéaire des signaux de luminance et de chrominance. Cette opération est l'opération inverse de celle qui, à l'émission, produit les signaux de luminance et de chrominance à partir des signaux de couleurs primaires produits par les tubes analyseurs de la caméra du système de télévision. Les coefficients de matriçage et de dématriçage utilisés peuvent être choisis parmi ceux figurant dans l'Avis 601 du CCIR (Comité Consultatif International de Radiodiffusion).

Les signaux numériques de couleurs primaires, produits par le dématriceur numérique, ont une fréquence d'échantillonnage égale à 2.F$_E$. Cette fréquence d'échantillonnage pouvant atteindre 27 MHz, la conversion numérique-analogique de ces signaux impose une utilisation de convertisseurs numériques-analogiques de type "flash". Ce type de convertisseur numérique-analogique est bien connu de l'homme de l'art.

Il faut noter que le circuit de l'invention est destiné à être réalisé préférentiellement sous forme d'un circuit intégré unique. Dans le cas d'une technologie MOS classique, par exemple, deux solutions sont particulièrement intéressantes pour la réalisation des convertisseurs numériques-analogiques. Selon une première structure, le convertisseur numérique-analogique est constitué de $2^8$ générateurs de courant élémentaires (Si chaque donnée numérique de luminance ou de chrominance est codée sur 8 bits) commandés par les sorties d'un décodeur recevant le signal numérique, et sommés à l'entrée d'un amplificateur de sortie monté en transconductance. Selon une seconde structure, le convertisseur numérique-analogique peut être constitué d'un diviseur potentiométrique comportant $2^8$ sorties, la sortie correspondant au code binaire reçu en entrée étant sélectionnée par un décodeur ; dans ce cas, un amplificateur de sortie est monté en suiveur.

On va maintenant décrire successivement en détail un mode de réalisation du filtre numérique interpolateur 2 et un mode de réalisation du dématriceur numérique 4. Ces modes de réalisation seront orientés dans le sens d'une réalisation du circuit de l'invention sous forme d'un circuit intégré unique. Cependant, ceci ne doit pas être considéré comme une limitation du circuit de l'invention qui peut être également réalisé au moyen d'une pluralité de circuits intégrés.

Dans les figures qui suivent, on a représenté chaque ligne de connexion par un trait unique pour rendre les dessins plus clairs. Il est bien entendu que les lignes véhiculant les données numériques de luminance ou de chrominance représentent en réalité des bus de données, c'est-à-dire un ensemble de lignes en parallèle.

On a détaillé sur la figure 2A la structure du filtre numérique interpolateur. On a supposé, dans ce mode de réalisation, que les signaux numériques de luminance et de chrominance se présentent en entrée du filtre numérique interpolateur sous la forme d'un signal numérique multiplexé Z. La forme de ce signal est représentée sur la figure 2B. Les données sont alternativement des données de luminance Y et des données de chrominance, ces dernières étant alternativement des données du signal de chrominance CR et des données du signal de chrominance CB.

Dans cette représentation, un point d'image sur deux, par exemple les points d'image d'indice pair, sont représentés par une suite de trois données : une donnée de chrominance CR, une donnée de luminance Y et une donnée de chrominance CB. Les points d'image d'indice impair sont représentés uniquement par une donnée de luminance Y.

Revenant sur la figure 2A, le filtre numérique interpolateur se compose de trois branches de traitement en parallèle. La première branche de traitement comprend un filtre interpolateur de luminance 8, pour suréchantillonner le signal de luminance Y dans un rapport 2, suivi d'un moyen de mise en forme 10. Les deuxième et troisième branches de traitement sont identiques. Elles comprennent chacune un premier filtre interpolateur de chrominance 12, pour suréchantillonner chacun des signaux de chrominance de manière à produire des signaux de chrominance ayant une fréquence d'échantillonnage identique à celle du signal de luminance contenu dans le signal multiplexé Z, un second filtre interpolateur de chrominance 14a et 14b, et un moyen de mise en forme 16a et 16b.

Comme on l'a représenté sur la figure, le premier filtre interpolateur de chrominance 12 peut avantageusement être un filtre unique traitant séquentiellement les deux signaux de chrominance CR et CB. Cette solution est particulièrement intéressante dans l'optique d'une réalisation intégrée du circuit de l'invention puisqu'elle permet de suréchantillonner les deux signaux de chrominance à l'aide d'un filtre unique. Cette structure est également adaptée à la forme particulière du signal multiplexé Z de la figure 2B. Bien entendu, il peut être préférable dans certaines applications de l'invention de prévoir un premier filtre interpolateur de chrominance sur chacune des deuxième et troisième branches.

Le traitement des données dans le filtre numérique interpolateur nécessite un signal d'horloge HE de fréquence F$^E$ égale à la fréquence d'échantillonnage du signal de luminance Y dans le signal multiplexé Z, et un signal d'horloge H2E de fréquence 2.F$^E$. Ces signaux d'horloge peuvent être produit par des techniques classiques de récupération de rythme à partir du signal reçu.

Le démultiplexage du signal Z peut être réalisé aisément à l'aide du signal d'horloge HE. Il suffit par exemple d'utiliser, dans le filtre interpolateur de luminance 8, des éléments actifs sur le front montant de l'horloge HE, et d'utiliser, pour les filtres interpolateurs de chrominance 12, 14a et 14b des éléments actifs sur le front descendant de ce signal d'horloge HE.

On va maintenant décrire successivement un mode de réalisation particulier de chacun des moyens du filtre numérique interpolateur de la figure 2A.

Dans la suite de la description, on notera CB$_{4n}$, Y$_{4n}$, CR$_{4n}$, Y$_{4n+2}$, où n est un entier, chaque trame de quatre données successives du signal multiplexé Z et Y$_m$, CR$_m$ et CB$_m$, où m est un entier, les données des signaux numériques de sortie du filtre numérique interpolateur. Avec ces notations, le rôle du filtre interpolateur de luminance est de calculer les éléments Y$_{4n+1}$ et Y$_{4n+3}$, où n est un entier, et de les intercaler entre Y$_{4n}$ et Y$_{4n+2}$ et entre Y$_{4n+2}$ et Y$_{4n+4}$. De même, le rôle du premier filtre interpolateur de chrominance consiste à calculer et intercaler les éléments $CR_{4n+2}$, $CR_{4n+4}$ et $CB_{4n+2}$ et $CB_{4n+4}$. Enfin, le second filtre interpolateur de chrominance calcule et intercale les éléments $CR_{4n+1}$, $CR_{4n+3}$ et $CB_{4n+1}$ et $CB_{4n+3}$.

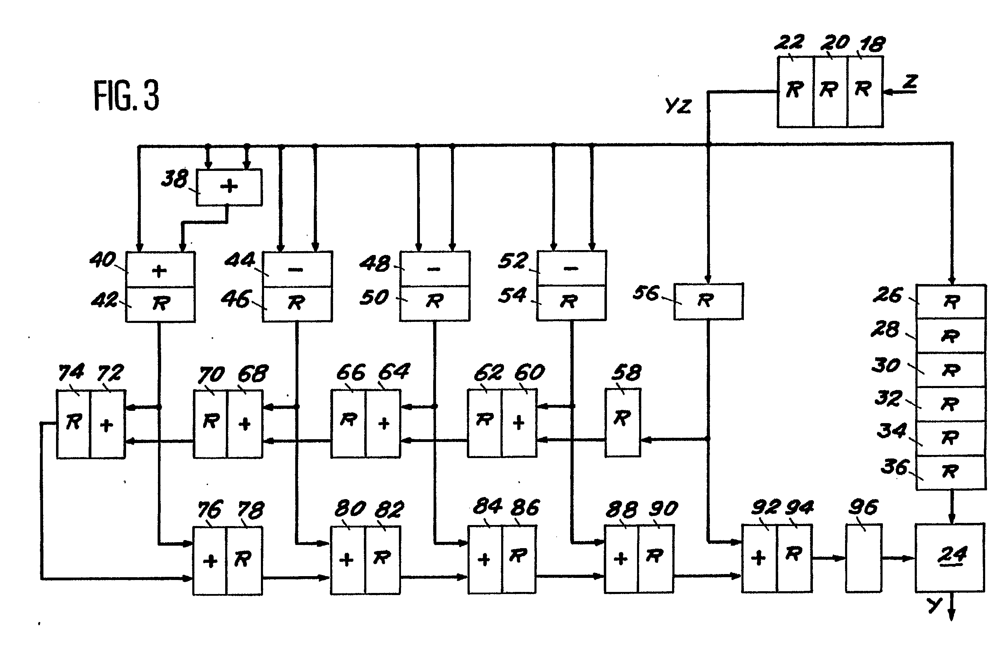

Le filtre interpolateur de luminance représenté sur la figure 3 est un filtre du 19ème ordre, dont la fonction de transfert est égale à :

$$G(z) = a_9 . z^{-27}$$
$$+ a_7 . z^{-25} + a_5 . z^{-23} + a_3 . z^{-21} + a_1 . z^{-19} + a_0 . z^{-18}$$
$$+ a_1 . z^{-17} + a_3 . z^{-15} + a_5 . z^{-13} + a_7 . z^{-11} + a_9 . z^{-9}, \text{ avec}$$
$$z = e^{-pT} \text{ où : } p = j2\pi f, \; T = \frac{1}{2FE} \text{ et}$$

$$a_0 = 1 \qquad \text{(en notation binaire)}$$
$$a_1 = 0,101010$$
$$a_3 = -0,001111$$
$$a_5 = 0,000111$$
$$a_7 = -0,000011$$
$$a_9 = 0,000001$$

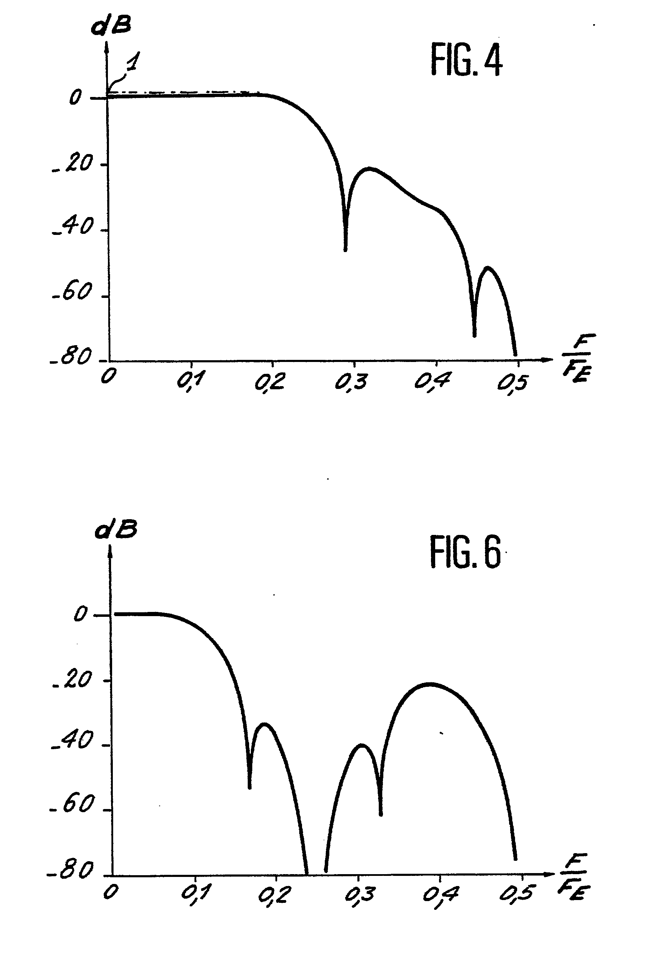

Cette fonction de transfert est définie pour la suite de données $Y_1$, $Y_2$, $Y_3$, $Y_4$, $Y_5$,... dans laquelle la suite des données d'indice pair constitue le signal numérique de luminance échantillonné à la fréquence $F_E$ reçue par le filtre et dans laquelle les données d'indice impair sont nulles en entrée du filtre. De préférence, ce filtre est de type demi-bande. Dans ce cas, il transmet sans modification les données d'indice pair et calcule une valeur pour chaque données d'indice impair. Le filtre interpolateur de luminance de la figure 3 est réalisé selon ce principe ; sa caractéristique gain fréquence est représentée sur le diagramme de la figure 4.

Ce filtre comprend un ensemble de registres, un ensemble d'additionneurs, un moyen de détection de saturation et un multiplexeur. Tous les registres de ce filtre sont actifs sur le front montant du signal d'horloge HE. Le filtre comprend en entrée une suite de trois registres 18, 20, 22. Le premier registre 18 permet de démultiplexer le signal Z de manière à ne recueillir que les données de luminance Y. Les deux autres registres ont simplement pour rôle de retarder les données de luminance Y pour synchroniser les signaux suréchantillonnés de luminance et de chrominance en entrée du dématriceur numérique.

La donnée YZ délivrée par le registre 22 est appliquée d'une part sans traitement sur une entrée du multiplexeur de sortie 24 par l'intermédiaire d'une suite de registres 26, 28, 30, 32, 34 et 36 disposés en cascade, et est d'autre part traitée pour produire une valeur intermédiaire entre deux échantillons d'entrée, cette valeur intermédiaire étant appliquée sur une autre entrée du multiplexeur de sortie 24. Cette valeur intermédiaire est déterminée par la fonction de transfert indiquée plus haut. La multiplication d'une donnée et d'un coefficient est réalisée au moyen d'additionneurs. Ces coefficients sont choisis de préférence de manière à diminuer la complexité des multiplications, c'est-à-dire en limitant le nombre de bits à 1.

Pour la multiplication par le coefficient $a_1$, le signal YZ est reçu sur les deux entrées d'un additionneur 38 et sur une entrée d'un additionneur 40 dont l'autre entrée est reliée à la sortie de l'additionneur 38. La valeur produite par l'additionneur 40 est mémorisée dans un registre 42. La première entrée de l'additionneur 38 reçoit la donnée YZ où tous les bits sont décalés d'un rang vers la droite (division par 2) et la deuxième entrée reçoit le même signal où tous les bits sont décalés de trois rangs vers la droite (division par 8). La première entrée de l'additionneur 40 reçoit de même la donnée YZ où tous les bits sont décalés de cinq rangs vers la droite (division par 32). Le registre 42 contient alors la valeur $a_1 . YZ$.

De même, compte tenu du fait que :
$a_3 = -0,001111 = -0,010000 + 0,000001$,
la valeur $a_3 . YZ$ peut être obtenue par soustraction entre la donnée YZ où chaque bit est décalé de six rangs vers la droite et la donnée YZ où chaque bit est décalé de deux rangs vers la droite. Cette valeur est donc produite par un unique soustracteur 44. Elle est mémorisée dans un registre 46.

De la même manière, compte tenu de :
$a_5 = 0,000111 = 0,001000 - 0,000001$ et
$a_7 = 0,000011 = -0,000100 + 0,000001$,
les valeurs $a_5 . YZ$ et $a_7 . YZ$ s'obtiennent chacune au moyen d'un soustracteur 48, 52. Elles sont mémorisées respectivement dans les registres 50, 54. Enfin, la valeur $a_9 YZ$ s'obtient simplement par décalage de la donnée YZ. Elle est mémorisée dans un registre 56.

6

Le filtre comprend d'autres additionneurs et d'autres registres pour additionner les différents coefficients mémorisés dans les registres 42, 46, 50, 54 et 56. Il comprend un registre 58 dont l'entrée est reliée à la sortie du registre 56, un additionneur 60 dont les entrées reçoivent les données mémorisées dans les registres 54 et 58, un registre 62 pour mémoriser la donnée produite par l'additionneur 60, un additionneur 64 dont les entrées sont reliées aux registres 50 et 62, un registre 66 pour mémoriser la donnée produite par l'additionneur 64, un additionneur 68 dont les entrées sont reliées aux registres 46 et 66, un registre 70 pour mémoriser la donnée produite par l'additionneur 68, un additionneur 72 dont les entrées sont reliées aux registres 42 et 70, un registre 74 pour mémoriser la donnée produite par l'additionneur 72, un additionneur 76 dont les entrées sont reliées au registre 42 et au registre 74, un registre 78 pour mémoriser la donnée produite par l'additionneur 76, un additionneur 80 dont les entrées sont reliées aux registres 46 et 78, un registre 82 pour mémoriser la donnée produite par l'additionneur 80, un additionneur 84 dont les entrées sont reliées aux registres 50 et 82, un registre 86 pour mémoriser la donnée produite par l'additionneur 84, un additionneur 88 dont les entrées sont reliées aux registres 54 et 86, un registre 90 pour mémoriser la donnée produite par l'additionneur 88, un additionneur 92 dont les entrées sont reliées aux registres 56 et 90, et un registre 94 pour mémoriser la donnée produite par l'additionneur 92.

Le registre 94 est suivi d'un moyen de saturation 96 pour tronquer et saturer la donnée reçue sur 8 bits (si les données contenues dans le signal multiplexé Z sont codées sur 8 bits). La sortie de ce moyen de détection de saturation est reliée à une entrée du multiplexeur de sortie 24. Celui-ci est commandé de manière connue par une horloge dérivée du signal d'horloge HE. Il délivre une suite de données de luminance contenant la suite des données de luminance extraites du signal Z entre chacune desquelles est intercalée une valeur intermédiaire calculée par le filtre qui vient d'être décrit.

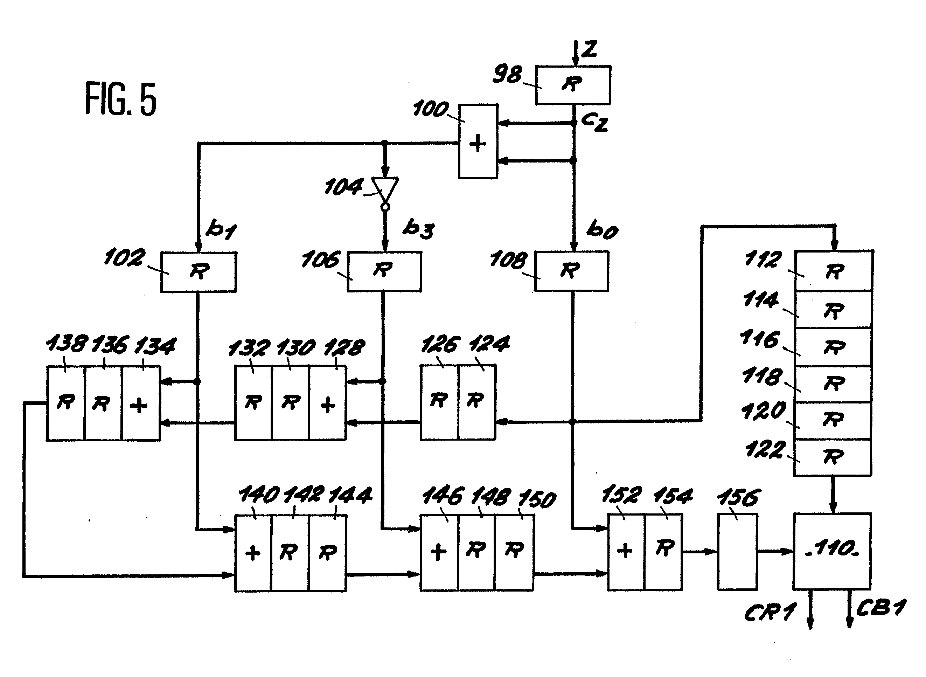

Le premier filtre interpolateur de chrominance a une structure semblable à celle du filtre interpolateur de luminance. Dans le cas particulier décrit, où les signaux de chrominance CR et CB sont échantillonnés à une fréquence moitié de celle du signal de luminance Y (figure 2B), le premier filtre interpolateur de chrominance représenté sur la figure 5 réalise un suréchantillonnage de chacun des signaux de chrominance dans un rapport 2.

Le premier filtre interpolateur de chrominance 12 représenté sur la figure 5 est un filtre demi-bande du onzième ordre dont la fonction de transfert est

$$G(z) = b_5 \cdot z^{-26} + b_3 \cdot z^{-22} + b_1 \cdot z^{18} + b_0 \cdot z^{-16} + b_1 \cdot z^{-14}$$
$$+ b_3 \cdot z^{-10} + b_5 \cdot z^{-6}, \text{ avec } z = e^{-pT} \text{ où : } p = j2\pi f, \quad T = \frac{1}{2FE} \text{ et}$$
$$b_0 = 1 \qquad \text{(en notation binaire)}$$
$$b_1 = 0,10100$$
$$b_3 = -0,00101$$
$$b_5 = 0,00001$$

Cette fonction de transfert est définie pour les suites de données $CR_1$, $CR_2$, $CR_3$, $CR_4$,... et $CB_1$, $CB_2$, $CB_3$, $CB_4$,... dans lesquelles les données d'indice 4n (n entier) constituent les signaux numériques de chrominance échantillonnés à la fréquence $F_E/2$ reçus par le filtre et dans lesquelles les données d'indice 4n+1, 4n+2 et 4n+3 sont nulles en entrée du filtre. Ce filtre transmet sans modification les données d'indice 4n et calcule une valeur pour chaque donnée d'indice 4n+2.

Tous les registres du filtre de la figure 5 sont actifs sur le front descendant du signal d'horloge HE. Les données CR et CB traitées par ce filtre étant multiplexées dans le temps, un cycle sur deux du signal d'horloge HE sera consacré à chacune des composantes de la chrominance. C'est pour cette raison que sont disposés deux registres en sortie de chaque additionneur, alors qu'il n'y en avait qu'un dans le filtre interpolateur de luminance.

Le filtre représenté sur la figure 5 comporte en entrée un registre 98 permettant d'extraire les données de chrominance CR et CB du signal multiplexé Z. Le signal CZ mémorisé dans ce registre est multiplié par chacun des coefficients de la fonction de transfert. Ceci est réalisé comme dans le filtre interpolateur de luminance au moyen d'additionneurs.

Le signal CZ divisé par 2 par décalage d'un rang de ses bits est appliqué sur une première entrée d'un additionneur 100 dont l'autre entrée reçoit le signal CZ divisé par 8 par décalage de trois rangs de ses bits. Le signal produit par l'additionneur est égal à $b_1 \cdot CZ$ ; il est mémorisé dans un registre 102. Le signal délivré par l'additionneur 100 est inversé dans un inverseur 104 et mémorisé après division par 4 par décalage de deux rangs de ses bits dans un registre 106. Celui-ci contient donc la valeur $b_3 \cdot CZ$ (puisque $b_3 = -b_1 : 4$). La donnée CZ est également transmise à un registre 108.

La sortie de ce registre 108 est reliée d'une part à une entrée d'un multiplexeur de sortie 110, par l'intermédiaire d'une suite de registres 112, 114, 116, 118, 120, 122 disposés en cascade, et d'autre part l'entrée d'un premier registre 124 d'une suite de deux registres 124, 126. Le registre 124 contient la valeur $b_5$. CZ obtenue à partir de la donnée CZ contenue dans le registre 108 par décalage de ses bits de 5 rangs.

Le filtre comprend également un additionneur 128 dont les entrées sont reliées aux registres 106 et 126, cet additionneur étant suivi de deux registres 130, 132, un additionneur 134 dont les entrées sont reliées aux sorties des registres 102 et 132, cet additionneur étant suivi de deux registres 136, 138, un additionneur 140 dont les entrées sont reliées aux registres 102 et 138, cet additionneur étant suivi de deux registres 142, 144, un additionneur 146 dont les entrées sont reliées aux registres 106 et 144, cet additionneur étant suivi de deux registres 148, 150, un additionneur 152 dont les entrées sont reliées aux registres 108 et 150, cet additionneur étant suivi d'un registre 154.

La sortie du registre 154 est reliée à une entrée du multiplexeur de sortie 110 par l'intermédiaire d'un moyen de détection de saturation 156 qui tronque et sature sur 8 bits (dans le cas où les données contenues dans le signal multiplexé Z sont sur huit bits) la donnée délivrée par le registre 154. Le multiplexeur de sortie 110 est commandé de manière connue par un signal d'horloge dérivé du signal d'horloge HE pour produire sur deux sorties les deux signaux de chrominance CR et CB à une fréquence d'échantillonnage $F_E$.

Chacun de ces signaux est ensuite nouveau suréchantillonné dans un rapport 2 par un second filtre interpolateur de chrominance. Ceux-ci ont une fonction de transfert identique égale à :

$G(z) = C_1.z^{-3} + C_0.z^{-2} + C_1.z^{-1}$ avec $z = e^{pT}$ et
$C_0 = 1$ (en notation binaire)
$C_1 = 0,1$

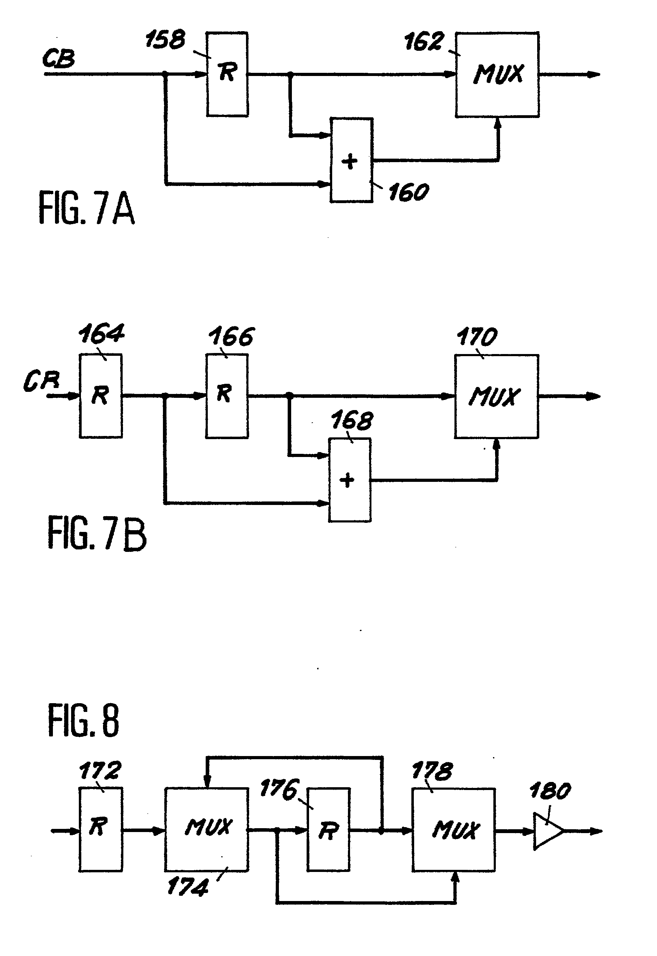

Cette fonction de transfert correspond, pour chaque signal de chrominance, au calcul et à l'insertion d'une donnée intermédiaire, entre deux données consécutives, cette donnée intermédiaire étant égale à la moyenne entre ces données consécutives. La structure de chacun de ces filtres est donc très simple. Un exemple de réalisation de ces filtres 14a et 14b est donné sur les figures 7A et 7B respectivement pour les signaux de chrominance CB et CR.

La caractéristique gain-fréquence du premier filtre de chrominance 12, associé soit au filtre moyenneur 14a, soit au filtre moyenneur 14b est donnée sur la figure 6.

Le second filtre interpolateur du signal de chrominance CB représenté sur la figure 7A comprend un registre 158 recevant le signal CB délivré par le premier filtre interpolateur de chrominance, un additionneur 160 dont une entrée est reliée à la sortie du registre 158 et dont l'autre entrée est reliée à l'entrée de ce registre, et un multiplexeur 162 dont une entrée est reliée à la sortie du registre 158 et dont l'autre entrée est reliée à la sortie de l'additionneur 160. Les connexions sur les entrées de l'additionneur 160 sont conçues pour diviser par deux les données appliquées sur ses entrées.

Le second filtre interpolateur du signal de chrominance CR représenté sur la figure 7B a une architecture analogue à celle du filtre de la figure 7A. Il comprend un registre 166, un additionneur 168 et un multiplexeur 170 formant un circuit de traitement identique à celui de la figure 7A. Il comprend en outre en entrée un registre 164 pour retarder le signal de chrominance CR d'une période du signal HE afin de synchroniser les deux signaux de chrominance.

En sortie de ces seconds filtres interpolateurs de chrominance, les signaux de chrominance ont une fréquence d'échantillonnage $2.F_E$ égale la fréquence d'échantillonnage du signal de luminance délivré par le filtre interpolateur de luminance. De plus, ces trois signaux sont synchronisés entre eux grâce aux registres 20, 22 (figure 3) et au registre 164 (figure 7B). Chacun de ces trois signaux est reçu dans un moyen de mise en forme (référencés 10, 16a et 16b sur la figure 2A) avant d'être appliqué sur les entrées du dématriceur numérique.

La figure 8 illustre un mode de réalisation de chacun de ces moyens de mise en forme. Il comprend en série un registre 172, un multiplexeur 174, un registre 176, un multiplexeur 178 et un amplificateur 180. Le multiplexeur 174 est muni d'une première entrée reliée à la sortie du registre 172 et une seconde entrée reliée à la sortie du registre 176. Le multiplexeur 178 est muni d'une première entrée reliée à la sortie du registre 176 et d'une seconde entrée reliée à la sortie du multiplexeur 174. Les registres de ce moyen de mise en forme sont actifs sur le front montant du signal d'horloge H2E.

Ce moyen de mise en forme assure d'une part le maintien d'une donnée dans le cas d'un échantillon sortant réputé faux. En effet, tant sur la luminance que sur la chrominance, le calcul d'un échantillon sortant est fait à partir d'échantillons entrants répartis sur six trames consécutives du signal multiplexé Z. Si l'une de ces six trames n'est pas valide, en particulier en début et enfin de ligne du signal de télévision, le calcul des échantillons donnera un résultat faux, a priori imprévisible. Tout échantillon sortant calculé réputé faux sera donc remplacé par l'échantillon non calculé immédiatement précédent, indépendamment de la validité de celui-ci.

Le maintien d'une donnée est commandé par un signal VALY pour la luminance et par un signal VALC pour la chrominance. Ces signaux sont élaborés à partir d'un signal externe de validation qui est échantillonné sur chaque trame multiplexée Z.

Ce moyen de mise en forme assure d'autre part la réalisation, ou non, en fonction d'un signal de commande extérieur d'un retard égal à une période de l'horloge H2E sur les données entrantes (Y1, CR2, CB2). En effet, si la structure d'échantillonnage du signal de luminance a été choisie en quinconce-trame, il est nécessaire de retarder les signaux Y1, CR2 et CB2 d'une période d'horloge H2E, alternativement d'une trame vidéo à l'autre. Si la structure d'échantillonnage est orthogonale, ce retard n'est par contre pas nécessaire.

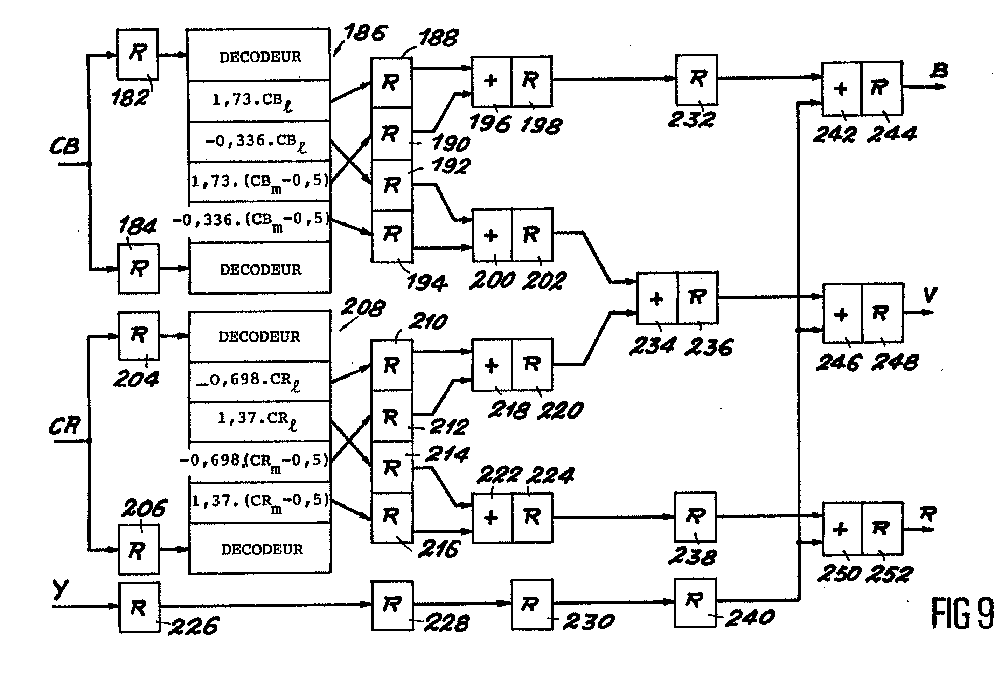

La figure 9 illustre un mode de réalisation du dématriceur numérique recevant les composantes numériques de luminance Y et de chrominance CR et CB échantillonnées à la fréquence $2.F_E$. Ce dématriceur délivre les signaux numériques de couleurs primaires B, V et R par combinaison linéaire entre les signaux reçus en entrée selon le système d'équation suivant :

$$R=+1,000.Y+1,370.(CR-0,5)+0,000.(CB-0,5)$$
$$V=+1,000.Y-0,698.(CR-0,5)-0,336.(CB-0,5)$$
$$B=+1,000.Y+0,000.(CR-0,5)+1,730.(CB-0,5)$$

La multiplication de chaque composante d'entrée par un coefficient fixe peut être effectuée de différentes manières. Ceci peut être réalisé par exemple par un multiplieur complet, par un réseau d'additionneurs câblés en fonction de ce coefficient fixe, par une table de multiplication ou bien par la division de chaque opérande en plusieurs champs, multiplications partielles de ces champs et addition finale.

L'utilisation d'un multiplieur complet est coûteuse car elle laisse des ressources inutilisées, le multiplieur étant capable d'effectuer la multiplication de deux nombres quelconques. La technique du réseau d'additionneurs est utilisée pour le filtre interpolateur de luminance et pour le premier filtre interpolateur de chrominance représentés sur les figures 3 et 5. Cette technique n'est utilisable que si le coefficient fixe est relativement simple, c'est-à-dire constitué de peu de bits à 1 ou -1. L'utilisation d'une table de multiplication, par exemple sous la forme d'un réseau prédiffusé programmé a un coût qui croît de façon exponentielle avec le nombre de bits de l'opérande.

Lorsque les coefficients fixes sont complexes, comme c'est le cas dans le dématriceur de l'invention, la solution la plus avantageuse est donc de diviser chaque opérande en plusieurs champs, de multiplier ces opérandes champ par champ et d'additionner les résultats de ces multiplications partielles.

Le dématriceur numérique représenté sur la figure 9 fonctionne suivant ce principe. Chaque donnée de chrominance reçue en entrée, codée sur 8 bits, est décomposée en deux champs de chacun 4 bits. Pour une donnée du signal de chrominance CB, les 4 bits de poids faible $CB_l$ sont mémorisés dans un registre 182 et les 4 bits de poids fort $CB_m$ dans un registre 184. Ces données sont reçues dans un réseau logique programmé 186. Il délivre en sortie le produit $1,73.CB_l$ mémorisé dans un registre 188 et le produit $1,73.(CB_m-0,5)$ mémorisé dans un registre 190. Il délivre également vers un registre 192 le produit $-0,336.CB_l$ et vers un registre 194 le produit $-0,336.(CB_m-0,5)$. Les données contenues dans les registres 188 et 190 sont additionnées dans un additionneur 196 dont le signal de sortie est mémorisé dans un registre 198. De même, les données contenues dans les registres 192 et 194 sont reçues dans un additionneur 200 dont le signal de sortie est mémorisé dans un registre 202.

Le traitement d'une donnée du signal de chrominance CR se fait de manière identique. Les 4 bits de poids faible $CR_l$ sont mémorisés dans un registre 204 et les 4 bits de poids fort $CR_m$ dans un registre 206. La sortie de chacun de ces registres est reliée à une entrée d'un réseau logique programmé 208. Ce réseau logique délivre dans un registre 210 le produit $-0,698.CR_l$, dans un registre 212 le produit $-0,698.(CR_m-0,5)$, dans un registre 214 le produit $1,37.CR_l$ et dans un registre 216 le produit $1,37.(CR_m-0,5)$. Le contenu des registres 210 et 212 est additionné dans un additionneur 218 dont la sortie est reliée à un registre 220. De même, les contenus des registres 214 et 216 sont additionnés dans un additionneur 222 dont la sortie est reliée à un registre 224.

Le dématriceur numérique comprend également des registres 226, 228 et 230 en série pour synchroniser le signal de luminance Y avec les signaux de chrominance contenus dans les registres 198, 202, 220 et 224.

Il comprend aussi un registre 232 en aval du registre 198, un additionneur 234 suivi d'un registre 236, cet additionneur recevant sur ses entrées le contenu des registres 202 et 220, un registre 238 en aval du registre 224 et un registre 240 en aval du registre 230.

Il comprend enfin un additionneur 242 dont les entrées sont reliées aux registres 232 et 240, cet additionneur étant suivi d'un registre 244 qui délivre le signal numérique de couleur primaire bleu ; un additionneur 246 dont les entrées sont reliées aux registres 236 et 240, cet additionneur étant suivi d'un registre 248 qui délivre le signal numérique de couleur verte ; et un additionneur 250 dont les entrées sont reliées aux registres 238 et 240, cet additionneur étant suivi d'un registre 252 qui délivre le signal numérique de couleur rouge.

Les signaux numériques de couleurs primaires délivrés par les registres 244, 248 et 252 sont ensuite traités chacun par un convertisseur numérique-analogique, comme on l'a décrit en référence à la figure 1, pour produire les signaux analogiques de couleurs primaires.

## Revendications

1. Circuit d'élaboration des signaux de couleurs primaires (R, V, B) d'un signal de télévision à partir de ses composantes numériques de luminance (Y) et de chrominance (CR, CB), caractérisé en ce qu'il comprend en cascade :
- un filtre numérique interpolateur (2) recevant un signal numérique multiplexé desdites composantes dans lequel le signal de luminance est échantillonné à une fréquence $F_E$ quelconque et les signaux de chrominance à une fréquence F'$_E$, sous-multiple de F$_E$, ledit filtre délivrant un signal numérique de luminance et des signaux numériques de chrominance échantillonnés à la même fréquence 2.F$_E$,
- un dématriceur numérique (4) recevant les signaux numériques délivrés par le filtre et délivrant des signaux numériques de couleur primaire,
- un ensemble de trois convertisseurs numériques-analogiques (6) recevant chacun un signal numérique de couleur primaire et produisant les signaux analogiques de couleurs primaires (R, V, B).

2. Circuit selon la revendication 1, caractérisé en ce que la fréquence de coupure du filtre numérique est fonction de l'énergie de bruit dans le signal multiplexé.

3. Circuit selon l'une quelconque des revendications 1 et 2, caractérisé en ce que le filtre numérique interpolateur (2) comporte trois branches de traitement recevant le signal numérique multiplexé et délivrant respectivement le signal de luminance et les signaux de chrominance, la première branche de traitement comprenant un filtre interpolateur de luminance (8) suivi d'un moyen de mise en forme (10), les deuxième et troisième branches de traitement comprenant chacune en cascade un premier filtre interpolateur de chrominance (12) délivrant un signal à la fréquence d'échantillonnage F$_E$, un second filtre interpolateur de chrominance (14a, 14b) délivrant un signal à la fréquence 2F$_E$ et un moyen de mise en forme (16a, 16b).

4. Circuit selon l'une quelconque des revendications 1 à 3, caractérisé en ce qu'il comprend un ensemble de filtres interpolateurs de chrominance commutables et/ou de luminance commutables, chaque filtre ayant une fréquence de coupure différente, et un moyen de commutation pour choisir un filtre en fonction de l'énergie de bruit dans le signal multiplexé.

5. Circuit selon l'une quelconque des revendications 1 à 4, caractérisé en ce que le second filtre interpolateur de chrominance (14a, 14b) des deuxième et troisième branches de traitement calcule une valeur intermédiaire entre deux valeurs échantillonnées successives égale à la moyenne desdites valeurs échantillonnées.

6. Circuit selon l'une quelconque des revendications 3 à 5, caractérisé en ce que le filtre numérique interpolateur comprend un unique premier filtre interpolateur de chrominance (12) traitant les deux signaux de chrominance, ceux-ci étant multiplexés dans le temps.

7. Circuit selon l'une quelconque des revendications 1 à 6, caractérisé en ce qu'il est réalisé sous forme de circuit intégré sur un substrat unique.

## Claims

1. Circuit for producing primary colour signals (R, G, B) of a television signal from the digital luminance (Y) and chrominance (CR, CB) components thereof, characterized in that said circuit comprises in cascade:
   - a digital interpolating filter (2) receiving a multiplexed digital signal of said components in which the luminance signal is sampled at a random frequency F$_E$ and the chrominance signals at a frequency F'$_E$, a submultiple of F$_E$, the filter supplying a digital luminance signal and over-sampled digital chrominance signals at the same frequency 2·F$_E$,
   - a digital dematrixer (4) receiving the digital signal supplied by the filter and supplying digital primary colour signals,
   - a system of three digital-analog converters (6), each receiving a digital primary colour signal and producing analog primary colour signals (R, G, B).

2. Circuit according to claim 1, characterized in that the cutoff frequency of the digital filter is a function of the noise energy in the multiplexed signal.

3. Circuit according to either of the claims 1 and 2, characterized in that the digital interpolating filter (2) has three processing branches receiving the multiplexed digital signal and respectively supplying the luminance signal and the chrominance signal, the first processing branch comprising an interpolating luminance filter (8) followed by a shaping means (10), the second and third processing branches in each case comprising in cascade a first interpolating chrominance filter (12) supplying a signal at the sampling frequency F$_E$, a second interpolating chrominance filter (14a, 14b) supplying a signal at frequency 2F$_E$ and an shaping means (16a, 16b).

4. Circuit according to any one of the claims 1 to 3, characterized in that it comprises a group of switchable chrominance and/or luminance interpolating filters, each filter having a different cutoff frequency, and a switching means for choosing a filter as a function of the noise energy in the multiplexer signal.

5. Circuit according to any one of the claims 1 to 4, characterized in that the second interpolating chrominance filter (14a, 14b) of the second and third processing branches calculates an intermediate value between two successive sampled values equal to the mean value of said sampled values.

6. Circuit according to any one of the claims 3 to 5, characterized in that the digital interpolating filter comprises a single first interpolating chrominance filter (12) processing the two chrominance signals, which are multiplexed in time.

7. Circuit according to any one of the claims 1 to 6, characterized in that it is realized in the form of an integrated circuit on a single substrate.

## Patentansprüche

1. Schaltung zur Erzeugung von Farbwertsignalen (R, V, B) eines Fernsehsignals aus seinen digitalen Luminanz- und Chrominanzkomponenten (Y; CR, CB), dadurch gekennzeichnet, daß sie in Kaskade enthält:
— ein digitales Interpolationsfilter (2), das ein digitales Signal empfängt, das aus den genannten Komponenten multiplexiert ist, in welchem das Luminanzsignal mit einer beliebigen Frequenz $F_E$ abgetastet wird und die Chrominanzsignale mit einer Frequenz $F_E'$, die ein Untervielfaches von $F_E$ ist, abgetastet wird, welches Filter ein digitales Luminanzsignal und digitale Chrominanzsignale abgibt, die mit derselben Frequenz $2 \times F_E$ abgetastet sind,
— einen digitalen Dematrixer (4), der die von dem Filter abgegebenen digitalen Signale aufnimmt und digitale Primärfarbsignale abgibt,
— eine Gruppe aus drei Digital/Analog-Wandlern (6), die jeweils ein digitales Primärfarbsignal aufnehmen und analoge Primärfarbsignale (R, V, B) erzeugen.

2. Schaltung nach Anspruch 1, dadurch gekennzeichnet, daß die Grenzfrequenz des digitalen Filters eine Funktion der Rauschenergie in dem multiplexierten Signal ist.

3. Schaltung nach einem der Ansprüche 1 und 2, dadurch gekennzeichnet, daß das digitale Interpolationsfilter (2) drei Verarbeitungszweige enthält, die das multiplexierte digitale Signal aufnehmen und entsprechend das Luminanzsignal und die Chrominanzsignale abgeben, wobei der erste Verarbeitungszweig ein Luminanzinterpolationsfilter (8) enthält, das von einer Signalformeinrichtung (10) gefolgt wird, die zweiten und dritten Verarbeitungszweige jeweils in Kaskade ein erstes Chrominanzinterpolationsfilter (12), das ein Signal bei der Abtastfrequenz $F_E$ liefert, und ein zweites Chrominanzinterpolationsfilter (14a, 14b), das ein Signal bei der Frequenz $2F_E$ liefert und eine Signalformeinrichtung (16a, 16b) enthalten.

4. Schaltung nach einem der Ansprüche 1 bis 3, dadurch gekennzeichnet, daß sie eine Gruppe von umschaltbaren Chrominanzinterpolationsfiltern und/oder von umschaltbaren Luminanzinterpolationsfiltern enthält, wobei jedes Filter eine andere Grenzfrequenz aufweist, sowie eine Umschalteinrichtung, um ein Filter in Abhängigkeit von der Rauschenergie im multiplexierten Signal auszuwählen.

5. Schaltung nach einem der Ansprüche 1 bis 4, dadurch gekennzeichnet, daß das zweite Chrominanzinterpolationsfilter (14a, 14b) der zweiten und dritten Verarbeitungszweige einen Zwischenwert zwischen zwei aufeinanderfolgend abgetasteten Werten berechnet, der gleich dem Mittelwert der genannten abgetasteten Werte ist.

6. Schaltung nach einem der Ansprüche 3 bis 5, dadurch gekennzeichnet, daß das digitale Interpolationsfilter ein einziges erstes Chrominanzinterpolationsfilter (12) enthält, das die zwei Chrominanzsignale verarbeitet, wobei diese zeitmultiplexiert sind.

7. Schaltung nach einem der Ansprüche 1 bis 6, dadurch gekennzeichnet, daß sie als integrierte Schaltung auf einem einzigen Substrat ausgebildet sind.

EP 0 209 406 B1

# FIG. 1

$Y(F_E)$

$CR(F_{E/2})$

$CB(F_{E/2})$

FILTRE
NUMERIQUE
INTERPOLATEUR

*2*

$Y(2F_E)$

$CR(2F_E)$

$CB(2F_E)$

DEMATRICEUR
NUMERIQUE

*4*

$R(2F_E)$  *6*  CNA  R

$V(2F_E)$  CNA  V

$B(2F_E)$  CNA  B

*6*

# FIG. 2A

*8*

FILTRE
LUMINANCE

$HE$  $\int$

*Z*

*Y1*

*10*  MISE EN
FORME

Y

$H2E$  $\int$

*12*

PREMIER
FILTRE
CHROMINANCE

$HE$

*CR1*

*14a*  FILTRE
MOYENNEUR

$HE$

*CR2*

*16a*  MISE EN
FORME

$H2E$ $\int$

*CR*

*CB1*

*14b*  FILTRE
MOYENNEUR

$HE$

*CB2*

*16b*  MISE EN
FORME

$H2E$ $\int$

*CB*

# FIG. 2B

$C_R$  $Y$  $C_B$  $Y$  $C_R$  $Y$  $C_B$

POINT D'IMAGE p

POINT D'IMAGE p+1

POINT D'IMAGE p+2

FIG.3

FIG. 4

FIG. 6

FIG. 5

FIG. 7A

FIG. 7B

FIG. 8

FIG 9

EP 0 209 406 B1